# FASCICULE DE BREVET EUROPEEN

(11) **EP 2 778 495 B1**
(45) Date de publication et mention de la délivrance du brevet: **21.09.2016**
(21) Numéro de dépôt: 14159477.0
(22) Date de dépôt: 13.03.2014
(51) Int. Cl.: F16L 37/22, F16L 37/42

(54) **Elément femelle et raccord destines à réaliser la jonction amovible de deux canalisations de fluide**
Aufnahmeelement und Anschlussstück zur Ausführung einer abnehmbaren Verbindung zwischen zwei Flüssigkeitskanalisationssystemen
Female element and connector for performing the detachable connection of two fluid pipelines

(30) Priorité: 14.03.2013 FR 1352287
(43) Date de publication de la demande: 17.09.2014
(73) Titulaire: STÄUBLI FAVERGES, 74210 Faverges (FR)
(72) Inventeur: Tiberghien, Alain-Christophe, 74230 Sevrier (FR); Pastore, Olivier, 73400 Ugine (FR)
(74) Mandataire: Lavoix

(56) Documents cités:
- EP-A1- 2 278 205
- DE-U1-202012 104 409
- FR-A1- 2 740 852
- US-A- 3 558 160
- US-A1- 2011 298 208

## Description

La présente invention concerne un élément femelle d'un raccord destiné à réaliser la jonction amovible de deux canalisations de fluide sous pression, ainsi qu'un tel raccord.

L'invention concerne plus particulièrement les raccords destinés à la connexion rapide de canalisations parcourues par des fluides sous très haute pression, notamment supérieure à 200 bar.

Un raccord comporte classiquement un élément mâle et un élément femelle complémentaires, que l'on raccorde en les emmanchant l'un dans l'autre. Les éléments sont raccordés chacun à une canalisation ou à un réservoir. Le premier et/ou le deuxième élément sont généralement pourvus d'une soupape d'obturation qui est manoeuvrée vers une position ouverte lorsqu'on emmanche les deux éléments. Après cet emmanchement, les deux canalisations sont jointes de façon étanche et le fluide peut s'écouler de l'une à l'autre.

De manière classique, l'élément femelle comprend des billes de verrouillage prévues pour être sélectivement engagées dans une gorge périphérique externe de l'élément mâle, de manière à assurer le verrouillage de l'élément mâle dans l'élément femelle. Les zones de contact entre les billes et la gorge de l'élément mâle ont une aire réduite, de sorte que l'emmanchement répété des éléments mâle et femelle induit une usure ou un matage localisé de l'élément mâle, ce qui entrave le bon fonctionnement du raccord. En particulier, dans les applications telles que le remplissage de réservoirs de véhicules automobiles en gaz de pétrole liquéfié (G.P.L.), la pression du fluide transitant par le raccord peut atteindre 250 bar, ce qui génère des contraintes importantes sur les éléments constitutifs du raccord, notamment les billes de verrouillage, entrainant la diminution de la durée de vie du raccord. Par ailleurs, le déplacement radial des billes entre la position déverrouillée et la position verrouillée augmente l'encombrement radial de l'élément femelle.

EP-A-0 723 641 a pour objet un raccord comprenant un élément femelle qui comporte des cavités réparties sur la circonférence de l'élément femelle et débouchant dans le passage central de cet élément. Des supports montés dans les logements comportent des tétons pour l'articulation en rotation d'éléments de verrouillage. Les éléments de verrouillage comportent une surface de blocage cylindrique qui, en configuration désaccouplée du raccord, interagit avec une gorge extérieure de l'élément mâle, ce qui entraine l'usure ou le matage des surfaces de contact. Ce raccord comporte un grand nombre de pièces différentes ce qui rend l'assemblage long et délicat.

C'est à ces inconvénients qu'entend plus particulièrement remédier l'invention en proposant un élément femelle de raccord rapide dont l'encombrement radial est limité, et ayant des éléments de verrouillage robustes qui diminuent les risques d'usure ou de matage des zones de contact avec l'élément mâle de raccord.

A cet effet, l'invention a pour objet un élément femelle d'un raccord pour la jonction amovible de deux canalisations de fluide sous pression, s'étendant longitudinalement le long d'un axe et comprenant :
- un corps apte à recevoir en emmanchement un élément mâle et définissant un canal de passage du fluide qui s'étend le long de l'axe du raccord,
- au moins un élément de verrouillage mobile en rotation par rapport au corps de l'élément femelle autour d'un axe globalement orthoradial, entre une première position angulaire dans laquelle l'élément de verrouillage verrouille l'élément mâle dans une configuration accouplée, et une deuxième position angulaire dans laquelle l'élément de verrouillage autorise le retrait de l'élément mâle hors de l'élément femelle.
L'élément de verrouillage présente une première surface de guidage en forme de portion de cylindre à section circulaire centrée sur un axe de l'élément de verrouillage. L'élément de verrouillage est disposé dans une fente ménagée dans le corps de l'élément femelle et délimitée par un cylindre à section circulaire s'étendant le long de l'axe orthoradial et définissant une deuxième surface de guidage en rotation de la première surface de guidage de l'élément de verrouillage dans le corps de l'élément femelle autour de l'axe orthoradial.

Grâce à l'invention, la structure de l'élément femelle est simplifiée car la fente de l'élément de verrouillage peut être obtenue par un simple usinage, sans nécessiter l'ajout de pièces supplémentaires. De plus, l'élément de verrouillage peut être monobloc. Les surfaces de guidage en rotation de l'élément de verrouillage sont relativement étendues, ce qui améliore la robustesse de l'élément femelle.

Selon des aspects avantageux mais non obligatoires de l'invention, un tel raccord peut incorporer une ou plusieurs des caractéristiques techniques suivantes, prises dans toutes combinaisons techniquement admissibles :
- La première surface de guidage de l'élément de verrouillage s'étend sur toute la longueur des éléments de verrouillage, mesurée selon un axe de l'élément de verrouillage coïncidant avec l'axe orthoradial en configuration montée de l'élément de verrouillage dans la fente.
- L'élément de verrouillage présente une surface de verrouillage en forme de portion de cône qui est en contact avec une gorge périphérique de l'élément mâle dans la configuration accouplée.
- L'élément femelle comprend une bague de verrouillage mobile en translation le long de l'axe du raccord, entre une première position dans laquelle la bague de verrouillage constitue une butée en rotation de l'élément de verrouillage dans la première position angulaire de l'élément de verrouillage, et une deuxième position dans laquelle la bague de verrouillage autorise la rotation de l'élément de verrouillage.
- L'élément de verrouillage présente une surface de blocage qui est en appui contre la bague de verrouillage dans la première position angulaire de l'élément de verrouillage et qui est une portion d'un cylindre à section circulaire s'étendant le long de l'axe du raccord.
- La surface de verrouillage et la surface de blocage de l'élément de verrouillage sont incluses dans une enveloppe en forme de portion de cylindre définie par la première surface de guidage.
- La bague de verrouillage est mobile en translation le long de l'axe du raccord, vers une troisième position dans laquelle la bague de verrouillage constitue une butée en rotation de l'élément de verrouillage dans la deuxième position angulaire de l'élément de verrouillage. L'élément de verrouillage présente une surface d'appui qui est en appui contre la bague de verrouillage dans la deuxième position angulaire de l'élément de verrouillage.
- La surface d'appui de l'élément de verrouillage est incluse dans une enveloppe en forme de portion de cylindre définie par la première surface de guidage.
- L'élément de verrouillage est monobloc.
- La fente de l'élément de verrouillage est réalisée par usinage dans le corps.
- L'élément femelle comprend deux éléments de verrouillage opposés diamétralement, par rapport à l'axe du raccord.

L'invention concerne également un raccord pour la jonction amovible de deux canalisations de fluide sous pression, comprenant un élément mâle et un tel élément femelle.

L'invention sera bien comprise et d'autres aspects de celle-ci apparaitront plus clairement à la lumière de la description qui va suivre d'un raccord conforme à l'invention, donnée uniquement à titre d'exemple et faite en référence aux dessins annexés dans lesquels :
- la figure 1 est une vue en perspective éclatée d'un élément femelle et d'un élément mâle d'un raccord conforme à l'invention, une bague de manoeuvre de l'élément femelle n'étant pas représentée ;
- la figure 2 est une vue en perspective éclatée du raccord de la figure 1, sous un autre angle, la bague de manoeuvre de l'élément femelle n'étant pas représentée ;
- la figure 3 est une coupe longitudinale de l'élément femelle du raccord de la figure 1, dans une configuration désaccouplée ;
- la figure 4 est une coupe longitudinale du raccord de la figure 1, dans une configuration accouplée ;
- la figure 5 est une vue, à plus grande échelle, du détail V à la figure 4 ;
- la figure 6 est une coupe transversale selon le plan VI-VI à la figure 3 ;
- la figure 7 est une coupe transversale selon le plan VII-VII à la figure 4 ;
- les figures 8 et 9 sont des vues en perspectives d'un élément de verrouillage faisant partie de l'élément femelle du raccord de la figure 1 ;
- la figure 10 est une vue à plus grande échelle du détail X à la figure 4, dans une première configuration intermédiaire de désaccouplement ;
- la figure 11 est une vue analogue à la figure 10 dans une deuxième configuration intermédiaire de désaccouplement,

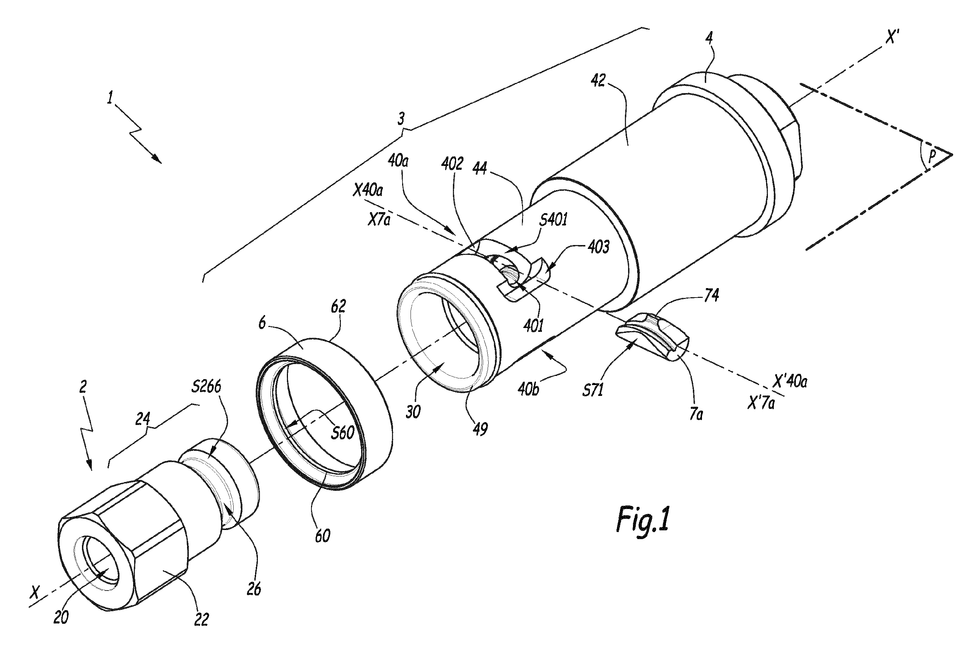

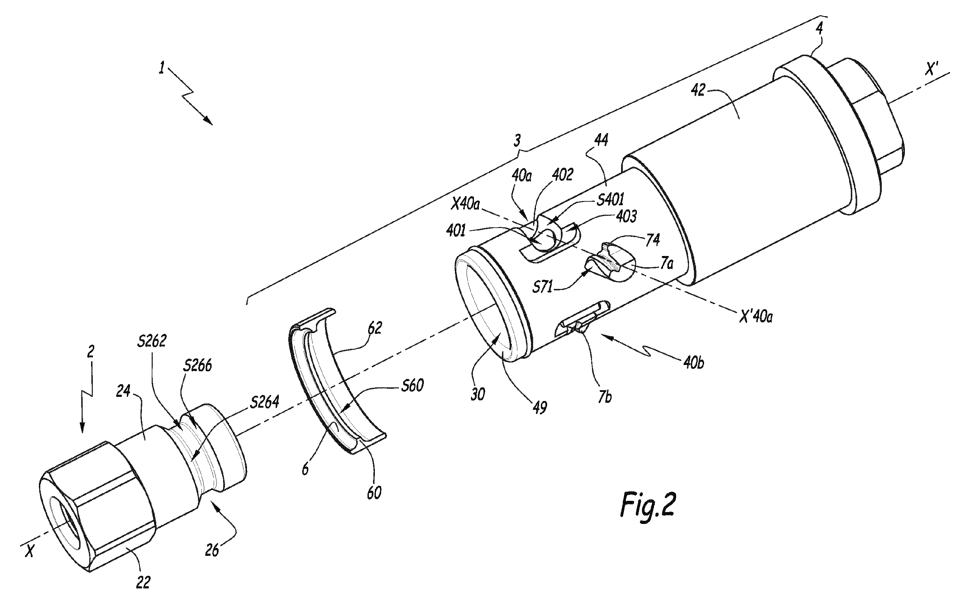

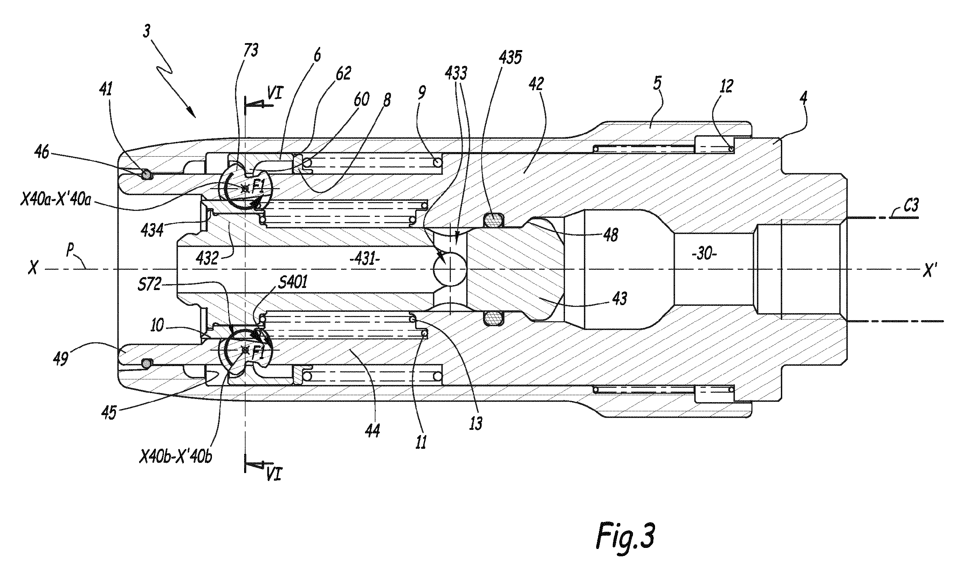

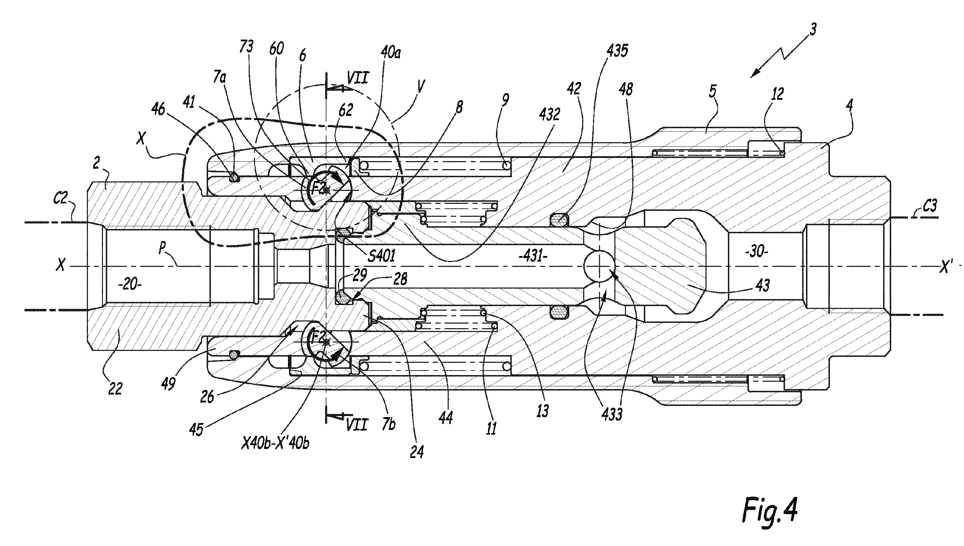

Les figures 1 à 11 montrent un raccord 1 comprenant un élément mâle 2 ainsi qu'un élément femelle 3. L'élément femelle 3 comprend un corps 4, ainsi qu'une bague de manoeuvre 5 et une bague de verrouillage 6 montées autour du corps 4 avec possibilité de mouvement relatif, La bague de manoeuvre 5 n'est pas représentée sur les figures 1 et 2. Lorsque les éléments 2 et 3 sont emmanchés l'un dans l'autre, ils s'étendent le long d'un axe longitudinal X-X'. L'axe X-X' constitue également un axe de révolution pour l'élément mâle 2, le corps 4 et les bagues 5 et 6. L'élément mâle 2 est relié à une canalisation de fluide C2, représentée en traits mixtes à la figure 4, et l'élément femelle 3 est relié à une canalisation de fluide C3, représentée en traits mixtes aux figures 3 et 4.

Une surface est qualifiée « d'interne » si elle est tournée vers l'axe X-X', et « d'externe » si elle est tournée dans le sens opposé. L'adjectif « proximal » désigne un élément d'une pièce proche de la canalisation C2 ou C3 à laquelle est reliée cette pièce, tandis que l'adjectif « distal » désigne un élément qui en est plus éloigné.

L'élément mâle 2 est constitué d'un corps principal formé d'une portion proximale 22 reliée à la canalisation C2 et d'une portion distale 24. L'élément mâle 2 définit un passage 20 longitudinal à travers lequel peut s'écouler un fluide, par exemple du gaz de pétrole liquéfié (G.P.L). La portion distale 24 comporte une gorge 26 périphérique et externe, dont la section transversale a globalement la forme d'un V à fond plat S262 dont les branches latérales sont inclinées vers l'extérieur et sont définies par des surfaces tronconiques proximale S264 et distale S266. La portion distale 24 de l'élément mâle 2 conforme au mode de réalisation exposé satisfait la norme ISO 17268 « Dispositifs de raccordement pour le ravitaillement des véhicules terrestres en hydrogène gazeux ».

Le corps 4 de l'élément femelle 3 comprend une portion proximale 42 et une portion distale 44. Le corps 4 délimite un canal 30 de passage du fluide et comporte une ouverture ou embouchure 49 distale, de forme complémentaire à la portion distale 24 de l'élément mâle 2, de façon à recevoir l'élément mâle 2. Le passage 20, l'embouchure 49 et le canal 30 s'étendent longitudinalement le long de l'axe X-X'.

La portion distale 24 de l'élément mâle 2 comporte une gorge intérieure 28 dans laquelle est reçu un joint torique 29 garantissant l'étanchéité entre l'élément mâle 2 et l'élément femelle 3 lorsque le raccord 1 est en configuration accouplée.

La portion distale 44 du corps 4 de l'élément femelle 3 loge une soupape 43 qui obture le canal 30 lorsque le raccord 1 est en configuration désaccouplée. La soupape 43 est repoussée par défaut vers l'embouchure 49 du corps 4, contre son siège 48 en position d'étanchéité au moyen d'un ressort 13 formant un organe élastique. De manière connue en soi, la soupape 43 comporte un passage longitudinal 431 qui est débouchant uniquement du côté de l'extrémité distale 432. A l'opposé de l'extrémité distale 432, le passage 431 communique avec deux trous 433 radiaux perpendiculaires. Dans la configuration désaccouplée du raccord 1, les trous 433 sont situés en aval d'un joint torique 435 logé dans une rainure interne du corps 4 de l'élément femelle 3. Par conséquent, le fluide présent dans le canal 30 de l'élément femelle 3 ne peut pas s'échapper, Dans la configuration accouplée du raccord 1, les trous 433 sont situés en amont du joint torique 435 et communiquent ainsi avec le canal 30 de l'élément femelle 3. Par conséquent, le fluide est libre de s'écouler entre l'élément femelle 3 et l'élément mâle 2, en passant au travers des trous 433 et du passage 431 de la soupape 43.

Dans la configuration accouplée du raccord 1, illustrée à la figure 4, la portion distale 24 de l'élément mâle 2 repousse la soupape 43 hors de son siège 48, à l'encontre d'un effort élastique de fermeture exercé par le ressort 13. Le fluide sous pression, par exemple du G.P.L. à une pression de 250 bar, peut alors s'écouler depuis la canalisation C3 amont vers la canalisation C2 aval, à travers le canal 30 et le passage 20. Les termes amont et aval font référence au sens de l'écoulement du fluide depuis la canalisation C3 vers la canalisation C2. L'autre sens d'écoulement est également envisageable ; les termes relatifs amont et aval sont alors inversés.

La bague de manoeuvre 5 de l'élément femelle 3 est repoussée par défaut vers l'embouchure 49, contre un jonc d'arrêt torique 41, logé dans une gorge 46 périphérique et externe ménagée au niveau de l'embouchure 49 du corps 4, au moyen d'un ressort 12. La bague de manoeuvre 5 permet de commander la déconnexion des éléments 2 et 3.

La bague de verrouillage 6 est mobile en translation par rapport au corps 4, le long de l'axe X-X'. La bague de verrouillage 6 est de forme annulaire et comporte une nervure ou collerette 60 intérieure de forme circulaire, qui fait saillie vers l'axe X-X'. La collerette 60 définit une surface cylindrique S60 d'axe X-X'. La bague de verrouillage 6 contribue à verrouiller le raccord 1 dans la configuration accouplée.

Une rondelle d'appui 8 est disposée contre une extrémité proximale 62 de la bague de verrouillage 6. Un ressort 9 est intercalé entre le corps 4 et la rondelle 8 et repousse par défaut la rondelle 8 et la bague de verrouillage 6 vers l'embouchure 49 de l'élément femelle 3.

La portion distale 44 du corps 4 de l'élément femelle 3 présente une forme tubulaire qui comporte deux lumières 40a et 40b diamétralement opposées et obtenues par usinage à l'aide d'un outil coupant tournant autour d'un axe orthoradial, autrement dit circonférentiel ou perpendiculaire à une direction radiale par rapport à l'axe X-X'. Les lumières 40a et 40b définissent chacune une fente 401 qui débouche de part et d'autre du corps 4 dans une direction radiale par rapport à l'axe X-X', c'est-à-dire à la fois dans le canal 30 et du côté de la bague de verrouillage 6. Les fentes 401 sont délimitées chacune par un cylindre à section circulaire d'axe X40a-X'40a ou X40b-X'40b qui définit ainsi une surface de guidage S401 concave, dite deuxième surface de guidage, appartenant au corps 4 et en forme de portion de cylindre à section circulaire et d'axe X40a-X'40a ou X40b-X'40b. Une première extrémité des fentes 401 est fermée par une paroi 402 du corps 4. La deuxième extrémité des fentes 401 est débouchante et communique avec une découpe 403 parallèle à l'axe X-X'. Le long de la circonférence du corps 4, les découpes 403 sont tournées l'une vers l'autre, de même que les parois 402. Le corps 4 est symétrique par rapport à un plan longitudinal P passant par l'axe X-X', entre les lumières 40a et 40b.

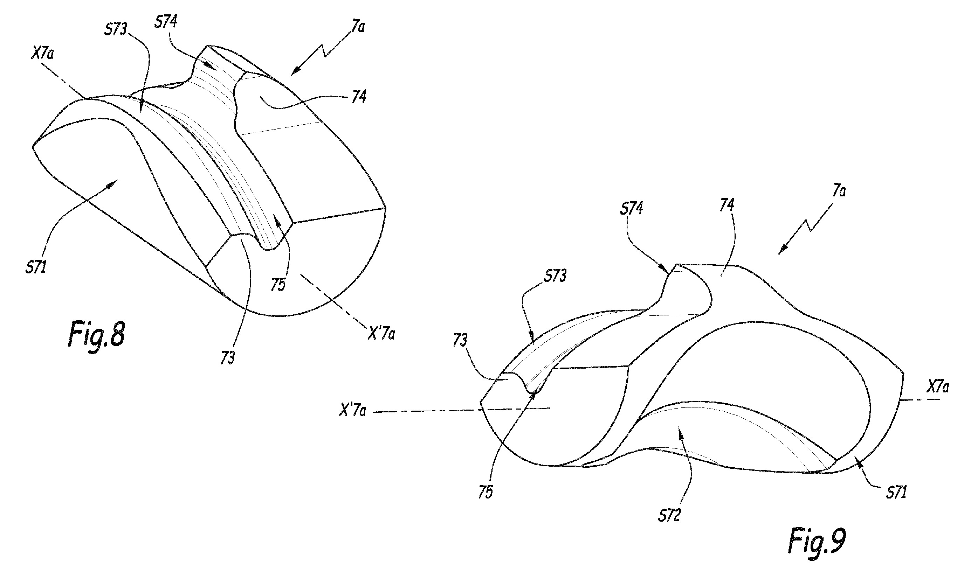

Un élément de verrouillage 7a ou 7b est logé dans la fente 401 de chaque lumière 40a ou 40b. Les figures 8 et 9 montrent l'élément de verrouillage 7a, sachant que l'élément de verrouillage 7b est identique. Les éléments de verrouillage 7a et 7b comportent chacun une surface de guidage S71, dite première surface de guidage, une surface de verrouillage S72 et une surface de blocage S73.

La première surface de guidage S71 des éléments de verrouillage 7a et 7b est globalement en forme de portion de cylindre à section circulaire d'axe X7a-X'7a ou X7b-X'7b ayant une géométrie complémentaire à celle de la deuxième surface de guidage S401 des lumières 40a et 40b.

La première surface de guidage S71 des éléments de verrouillage 7a et 7b s'étend sur toute la longueur des éléments de verrouillage 7a et 7b, mesurée le long de l'axe X7a-X'7a ou X7b-X'7b. La première surface de guidage S71 des éléments de verrouillage 7a et 7b est en contact surfacique avec la deuxième surface de guidage S401 des lumières 40a et 40b, de sorte que les axes X7a-X'7a et X40a-X'40a d'une part, et X7b-X'7b et X40b-X'40b d'autre part, sont confondus. Les éléments de verrouillage 7a et 7b sont donc mobiles en rotation, autour de l'axe X40a-X'40a ou X40b-X'40b, par rapport au corps 4. Les axes X40a-X'40a et X40b-X'40b coupent la portion distale 44 du corps 4, réalisant ainsi une condition au guidage en rotation des éléments de verrouillage 7a et 7b Le diamètre du cylindre qui définit la géométrie de la première surface de guidage S71 des éléments de verrouillage 7a et 7b est sensiblement égal, aux jeux fonctionnels près, au diamètre du cylindre qui définit la deuxième surface de guidage S401 de l'élément femelle 3, de manière à autoriser le mouvement de rotation des éléments de verrouillage 7a et 7b par rapport au corps 4 de l'élément femelle 3.

La surface de verrouillage S72 des éléments de verrouillage 7a et 7b est en forme de portion de cône d'axe X-X' et est complémentaire à la surface tronconique S266 de la gorge 26 de l'élément mâle 2.

La surface de blocage S73 des éléments de verrouillage 7a et 7b est en forme de portion de cylindre d'axe X-X'. Elle est complémentaire à la surface cylindrique S60 de la bague de verrouillage 6, c'est-à-dire de diamètre sensiblement égal. La surface de blocage S73 des éléments de verrouillage 7a et 7b est tournée globalement à l'opposé de l'axe X-X', selon une direction radiale. La surface de blocage S73 forme le sommet d'un épaulement 73.

Chaque élément de verrouillage 7a et 7b comporte une dent 74 proximale, faisant saillie radialement, à l'opposé de l'axe X-X'. Chaque dent 74 comporte une surface d'appui S74 dont la normale est globalement orientée selon une direction orthoradiale par rapport à l'axe X7a-X'7a ou X7b-X'7b.

Chaque élément de verrouillage 7a et 7b comporte une rainure 75 périphérique, externe, d'axe X7a-X'7a ou X7b-X'7b, qui forme un dégagement placé, selon une direction perpendiculaire à l'axe X7a-X'7a ou X7b-X'7b, entre l'épaulement 73 et la dent 74.

Les éléments de verrouillage 7a et 7b sont inclus dans une enveloppe en forme de portion de cylindre définie par la première surface de guidage S71. Ainsi, les surfaces S72, S73 et S74 sont incluses dans cette enveloppe.

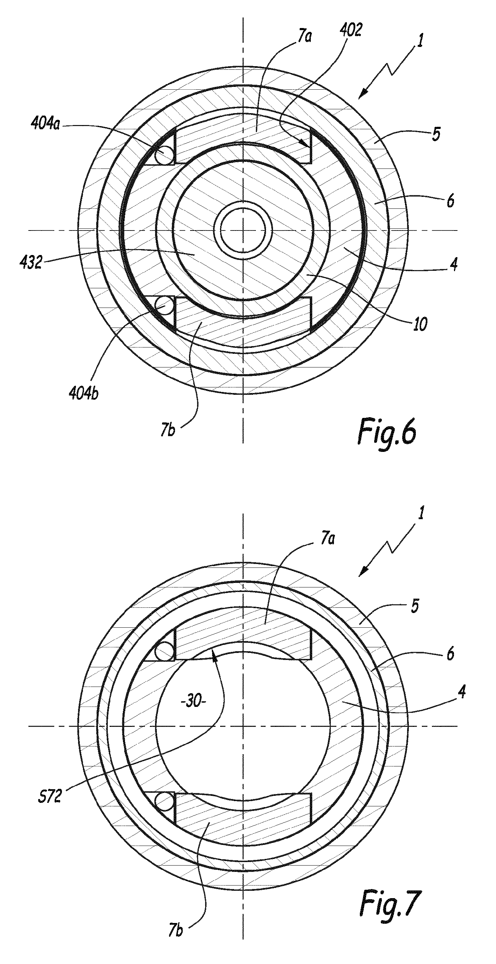

Le montage des éléments de verrouillage 7a et 7b dans les lumières 40a et 40b est réalisé en insérant les éléments de verrouillage 7a et 7b dans les fentes 401, du côté des découpes 403, puis en faisant glisser les éléments de verrouillage 7a et 7b dans les fentes 401, le long de l'axe X40a-X'40a ou X40b-X'40b, avec leur première surface de guidage S71 en contact avec la deuxième surface de guidage S401 des fentes 401, jusqu'à ce qu'ils viennent en butée contre la paroi 402. Le blocage en translation des éléments de verrouillage 7a et 7b, le long des axes X40a-X'40a et X40b-X'40b, est effectué dans un sens par les parois 402 et dans l'autre sens par des éléments d'arrêt 404a et 404b disposés dans les découpes 403 et visibles aux figures 6 et 7.

Le raccord 1 comprend une bague de mémoire 10 disposée autour d'une portion distale 432 de la soupape 43 qui comporte une collerette extérieure 434. Un ressort 11 repousse par défaut la bague de mémoire 10 vers l'embouchure 49 du corps 4, contre la collerette 434 de la soupape 43. La bague de mémoire 10 permet, dans la configuration désaccouplée du raccord 1, de maintenir les éléments de verrouillage 7a et 7b dans une position permettant l'introduction de l'élément mâle 2.

Pour accoupler les éléments 2 et 3, le rapprochement de l'élément mâle 2 et de l'élément femelle 3 est réalisé au moyen d'une translation de l'élément femelle 3 par rapport à l'élément mâle 2, selon l'axe X-X'. L'opérateur agit indifféremment sur l'élément femelle 3 ou sur l'élément mâle 2 pour accoupler les éléments 2 et 3.

Avant l'accouplement, l'élément femelle 3 est dans la configuration désaccouplée représentée à la figure 3. Dans cette configuration, la soupape 43 est repoussée contre son siège 48 par le ressort 13 et la bague de manoeuvre 5 est repoussée par le ressort 12 contre le jonc d'arrêt 41. La bague de mémoire 10 est repoussée contre la collerette 434 de la soupape 43 par le ressort 11. La rondelle 8 et la bague de verrouillage 6 sont repoussées vers l'embouchure 49 par le ressort 9. La collerette 60 de la bague de verrouillage 6 est dans une position axiale reculée, dans la rainure 75 et en butée contre les épaulements 73 des éléments de verrouillage 7a et 7b, appliquant un couple aux éléments de verrouillage 7a et 7b, autour des axes X40a-X'40a et X40b-X'40b, dans un premier sens représenté par les flèches F1 à la figure 3.

La bague de mémoire 10 est positionnée contre la surface de verrouillage S72 des éléments de verrouillage 7a et 7b et empêche la rotation, autour des axes X40a-X'40a ou X40b-X'40b, des éléments de verrouillage 7a et 7b qui sont maintenus dans une position angulaire fixe.

Au début de l'accouplement du raccord 1, on introduit la portion distale 22 de l'élément mâle 2 dans l'embouchure 49. L'élément mâle 2 entre en contact avec la portion distale 432 de la soupape 43 et avec la bague de mémoire 10. Il les repousse à l'encontre des forces de rappel exercées par les ressorts 11 et 13, de manière à libérer les éléments de verrouillage 7a et 7b de l'emprise de la bague de mémoire 10. La portion distale 22 de l'élément mâle 2 assure le blocage de la rotation des éléments de verrouillage 7a et 7b, selon les flèches F1, sous l'effet de l'effort exercé par la bague de verrouillage 6 contre les épaulements 73, au cours de la progression de l'élément mâle 2 dans le canal 30 de l'élément femelle 3. La bague de mémoire 10 est ainsi repoussée au-delà des lumières 40a et 40b dans lesquelles sont logés les éléments de verrouillage 7a et 7b.

Lorsque la gorge 26 de l'élément mâle 2 arrive à hauteur des éléments de verrouillage 7a et 7b, le dégagement formé par la gorge 26 libère la rotation des éléments de verrouillage 7a et 7b, autour des axes X40a-X'40a et X40b-X'40b, dans les lumières 40a et 40b, selon les flèches F1, par rapport au corps 4 de l'élément femelle 3. Par conséquent, la collerette 60 de la bague de verrouillage 6 n'est plus retenue dans la rainure 75 des éléments de verrouillage 7a et 7b, et la force de rappel exercée par le ressort 9 déplace la rondelle 8 et la bague de verrouillage 6 en direction de l'embouchure 49. En même temps, la collerette 60 de la bague de verrouillage 6 appuie contre les épaulements 73 des éléments de verrouillage 7a et 7b, ce qui provoque la rotation des éléments de verrouillage 7a et 7b selon les flèches F1.

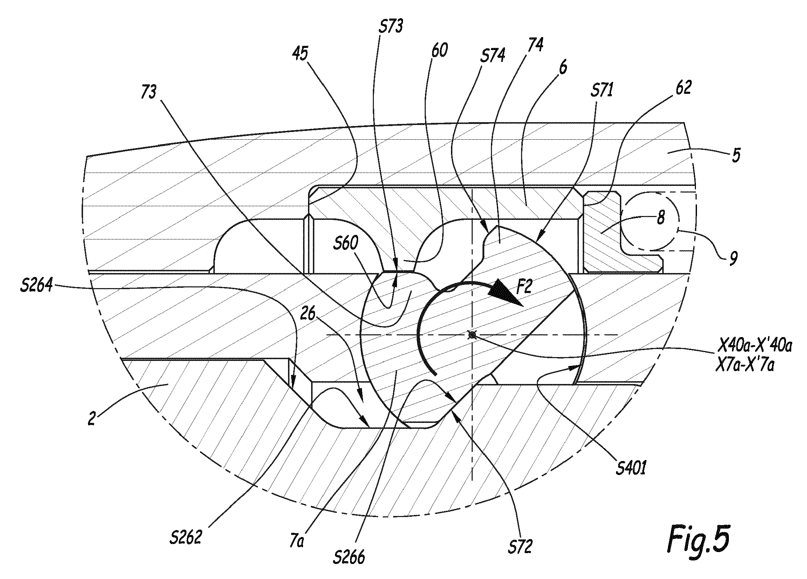

Les figures 4 et 5 montrent le raccord 1 en configuration accouplée. La bague de verrouillage 6 est dans une position axiale avancée, en contact contre un épaulement interne 45 du corps 4. La surface cylindrique S60 de la bague de verrouillage 6 est en contact avec la surface de blocage S73 des épaulements 73 des éléments de verrouillage 7a et 7b, ce qui empêche la rotation des éléments de verrouillage 7a et 7b, autour des axes X40a-X'40a et X40b-X'40b, dans un second sens, opposé au premier sens F1 et représenté par les flèches F2 aux figures 4 et 5. La surface de verrouillage S72 des éléments de verrouillage 7a et 7b est en contact avec la surface tronconique S266 de la gorge 26 de l'élément mâle 2, de sorte que les éléments de verrouillage 7a et 7b verrouillent l'élément mâle 2 à l'intérieur de l'élément femelle 3. En effet, les surfaces de verrouillage S72 bloquent le retrait de l'élément mâle 2 hors de l'élément femelle 3.

Dans la configuration accouplée, la soupape 43 est décollée de son siège 48, ce qui autorise le passage du fluide entre les éléments 2 et 3, à travers le passage longitudinal 431 et les trous 433 de la soupape 43, dans le passage 20 et dans le canal 30.

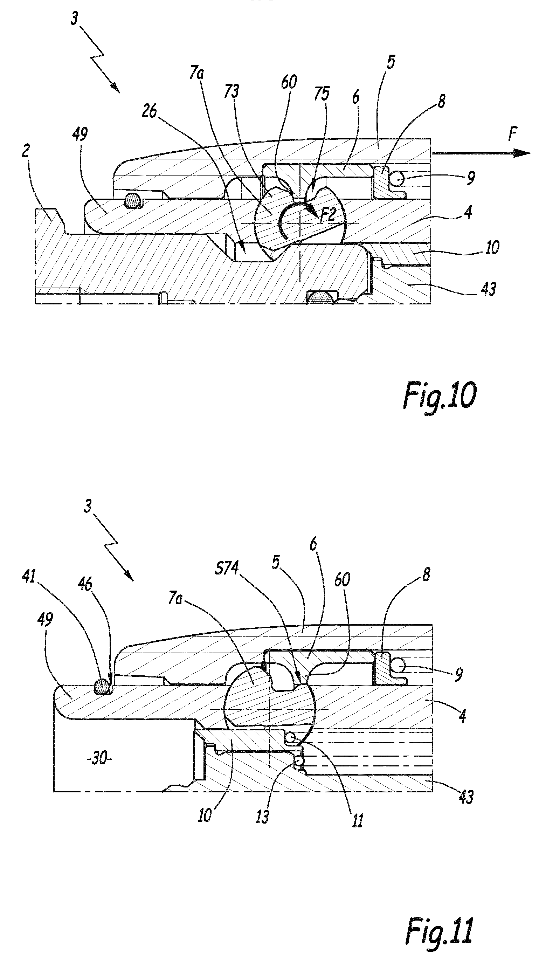

Pour désaccoupler les éléments 2 et 3, un opérateur tire sur la bague de manoeuvre 5 à l'opposé de l'embouchure 49, comme représenté par la flèche F à la figure 10, ce qui entraine la bague de verrouillage 6 à l'opposé de l'embouchure 49. La surface cylindrique S60 de la collerette 60 glisse contre la surface de blocage S73 de l'épaulement 73 des éléments de verrouillage 7a et 7b et parvient au niveau de la rainure 75, comme représenté à la figure 10. L'élément mâle 2 est repoussé hors de l'élément femelle 3 par la force de rappel exercée par les ressorts 11 et 13 sur la soupape 43 et sur la bague de mémoire 10. La bague de verrouillage 6 libère la rotation des éléments de verrouillage 7a et 7b qui sont entrainés en rotation, autour des axes X40a-X'40a et X40b-X'40b, par l'élément mâle 2 dans le deuxième sens F2. La gorge 26 de l'élément mâle 2 recule par rapport aux éléments de verrouillage 7a et 7b, la surface S266 de la gorge 26 glissant sur la surface de verrouillage S72 des éléments de verrouillage 7a et 7b.

Les ressorts 11 et 13 continuent de repousser l'élément mâle 2 hors de l'élément femelle 3, jusqu'à ce que la surface cylindrique S60 de la collerette 60 entre en contact avec la surface d'appui S74 des éléments de verrouillage 7a et 7b, comme représenté à la figure 11. Dès lors que les éléments de verrouillage 7a et 7b ne verrouillent plus l'élément mâle, la soupape 43 repousse l'élément mâle 2 en dehors de l'élément femelle 3 jusqu'à ce que la soupape 43 viennent en contact contre son siège 48, obturant ainsi le canal 30.

La bague mémoire 10 est repoussée vers l'embouchure 49 par le ressort 11 et s'intercale entre la soupape 43 et les éléments de verrouillage 7a et 7b de manière à maintenir les éléments de verrouillage 7a et 7b dans une position angulaire, dite deuxième position, représentée à la figure 3, qui permet l'introduction de l'élément mâle 2 dans l'élément femelle 3. Les éléments de verrouillage 7a et 7b sont ainsi maintenus dans une configuration de retrait possible de l'élément mâle 2, ce qui permet de garantir la libération de l'élément mâle 2 au cas où le ressort 12 de la soupape 43 n'est pas assez puissant.

Si la bague mémoire 10 était absente, la force de rappel exercée par le ressort 9 repousserait la bague de verrouillage 6 contre les épaulement 73 des éléments de verrouillage 7a et 7b, ce qui ferait tourner les éléments de verrouillage 7a et 7b dans le sens F1, les surfaces de verrouillage S72 bloquant alors l'introduction de l'élément mâle 2 dans l'élément femelle 3.

Au cours de la manoeuvre de désaccouplement, la bague de verrouillage 6 effectue un mouvement de translation le long de l'axe X-X' du raccord 1 au cours duquel elle occupe successivement trois positions. Dans une première position (figures 4, 5 et 7), la surface cylindrique S60 de la bague de verrouillage 6 constitue une butée en rotation des éléments de verrouillage dans le sens F2. Dans une deuxième position, la surface cylindrique S60 de la bague de verrouillage 6 a échappé à la surface de blocage S73 des éléments de verrouillage 7a et 7b et pénétrée dans la rainure 75 des éléments de verrouillage 7a et 7b qui sont alors libres de tourner. Dans une troisième position, la surface cylindrique S60 de la bague de verrouillage 6 est au contact avec la surface d'appui S74 des éléments de verrouillage 7a et 7b et constitue une butée en rotation des éléments de verrouillage dans le sens F1.

Le raccord 1 est automatique, il suffit d'introduire l'élément mâle 2 dans l'élément femelle 3 pour réaliser l'accouplement. Il n'est pas nécessaire de tirer sur la bague de manoeuvre 5.

Les zones de contact entre les pièces mobiles du raccord 1 sont relativement étendues, ce qui diminue l'intensité des pressions de contact en les répartissant sur les surfaces. Ceci est particulièrement avantageux dans les applications où la pression du fluide transitant dans le raccord est élevée. Le raccord 1 présente ainsi une bonne robustesse. En particulier, les éléments de verrouillage 7a et 7b sont en contact surfacique avec le corps 4 de l'élément femelle 3, par l'intermédiaire des surfaces de guidage S401 et S71. Les éléments de verrouillage 7a et 7b sont en contact surfacique avec l'élément mâle 2, par l'intermédiaire des surfaces tronconiques S266 et S72. La surface cylindrique S60 de la bague de verrouillage 6 est en contact surfacique avec les surfaces de blocage S73 des éléments de verrouillage 7a et 7b.

L'encombrement radial de l'élément femelle 3 est limité car les éléments de verrouillage 7a et 7b tournent mais ne se déplacent pas radialement pour passer de leur position de verrouillage à leur position déverrouillée et inversement.

La structure de l'élément femelle 3 est simple car les éléments de verrouillage 7a et 7b sont monoblocs. De plus, les lumières 40a et 40b sont obtenues par un usinage simple, réalisé dans le corps 4. Aucune pièce supplémentaire n'est intercalée entre le corps 4 et les éléments de verrouillage 7a et 7b, le corps 4 forme directement le logement de réception et de guidage en rotation des éléments de verrouillage 7a et 7b.

En variante, le raccord 1 comprend un unique élément de verrouillage. En fonction des dimensions du raccord, il est possible de disposer plus de deux éléments de verrouillage, par exemple trois ou quatre éléments de verrouillage. Cela permet de mieux répartir les efforts.

En variante, la bague de manoeuvre et la bague de verrouillage ne forment qu'une seule pièce.

En variante, les axes X40a-X'40a et X40b-X'40b sont globalement orthoradiaux, c'est-à-dire qu'ils comportent une composante orthoradiale ainsi qu'une composante axiale et/ou radiale.

## Revendications

1. Elément femelle (3) d'un raccord (1) pour la jonction amovible de deux canalisations (C2, C3) de fluide sous pression, s'étendant longitudinalement le long d'un axe (X-X') et comprenant :
- un corps (4) apte à recevoir en emmanchement un élément mâle (2) et définissant un canal (30) de passage du fluide qui s'étend le long de l'axe (X-X') du raccord (1),
- au moins un élément de verrouillage (7a, 7b) mobile en rotation par rapport au corps (4) de l'élément femelle (3) autour d'un axe globalement orthoradial (X40a-X'40a, X40b, X'40b), entre une première position angulaire dans laquelle l'élément de verrouillage (7a, 7b) verrouille l'élément mâle (2) dans une configuration accouplée (figures 4, 5, 7), et une deuxième position angulaire (figures 3, 6) dans laquelle l'élément de verrouillage (7a, 7b) autorise le retrait de l'élément mâle (2) hors de l'élément femelle (3),
**caractérisé en ce que**
- l'élément de verrouillage (7a, 7b) présente une première surface de guidage (S71) en forme de portion de cylindre à section circulaire centrée sur un axe (X7a-X'7a, X7b-X'7b) de l'élément de verrouillage (7a, 7b) et
- l'élément de verrouillage (7a, 7b) est disposé dans une fente (401) ménagée dans le corps (4) de l'élément femelle (3) et délimitée par un cylindre à section circulaire s'étendant le long de l'axe orthoradial (X40a-X'40a, X40b, X'40b) et définissant une deuxième surface de guidage (S401) en rotation de la première surface de guidage (S71) de l'élément de verrouillage (7a, 7b) dans le corps (4) de l'élément femelle (3) autour de l'axe orthoradial (X40a-X'40a, X40b, X'40b).

2. Elément femelle (3) selon la revendication 1, **caractérisé en ce que** la première surface de guidage (S71) de l'élément de verrouillage (7a, 7b) s'étend sur toute la longueur des éléments de verrouillage (7a, 7b), mesurée selon un l'axe (X7a-X'7a, X7b-X'7b) de l'élément de verrouillage (7a, 7b) coïncidant avec l'axe orthoradial (X40a-X'40a, X40b, X'40b) en configuration montée de l'élément de verrouillage dans la fente (401).

3. Elément femelle (3) selon l'une des revendications précédentes, **caractérisé en ce que** l'élément de verrouillage (7a, 7b) présente une surface de verrouillage (S72) en forme de portion de cône qui est en contact avec une gorge périphérique (26) de l'élément mâle (2) dans la configuration accouplée (figures 4, 5, 7).

4. Elément femelle (3) selon l'une des revendications précédentes, **caractérisé en ce que** l'élément femelle (3) comprend une bague de verrouillage (6) mobile en translation le long de l'axe (X-X') du raccord (1), entre une première position dans laquelle la bague de verrouillage (6) constitue une butée en rotation de l'élément de verrouillage (6) dans la première position angulaire (figures 4, 5, 7) de l'élément de verrouillage (7a, 7b), et une deuxième position (figure 3) dans laquelle la bague de verrouillage (6) autorise la rotation de l'élément de verrouillage (6).

5. Elément femelle (3) selon la revendication 4, **caractérisé en ce que** l'élément de verrouillage (7a, 7b) présente une surface de blocage (S73) qui est en appui contre la bague de verrouillage (6) dans la première position angulaire (figures 4, 5, 7) de l'élément de verrouillage (7a, 7b) et qui est une portion d'un cylindre à section circulaire s'étendant le long de l'axe (X-X') du raccord (1).

6. Elément femelle (3) selon la revendication 5, **caractérisé en ce que** la surface de verrouillage (S72) et la surface de blocage (S73) de l'élément de verrouillage (7a, 7b) sont incluses dans une enveloppe en forme de portion de cylindre définie par la première surface de guidage (S71).

7. Elément femelle (3) selon l'une des revendications 4 à 6, **caractérisé en ce que** la bague de verrouillage (6) est mobile en translation le long de l'axe (X-X') du raccord (1), vers une troisième position dans laquelle la bague de verrouillage (6) constitue une butée en rotation de l'élément de verrouillage (6) dans la deuxième position angulaire (figure 11) de l'élément de verrouillage (7a, 7b), et **en ce que** l'élément de verrouillage (7a, 7b) présente une surface d'appui (S74) qui est en appui contre la bague de verrouillage (6) dans la deuxième position angulaire (figure 11) de l'élément de verrouillage (7a, 7b).

8. Elément femelle (3) selon la revendication 7, **caractérisé en ce que** la surface d'appui (S74) de l'élément de verrouillage (7a, 7b) est incluse dans une enveloppe en forme de portion de cylindre définie par la première surface de guidage (S71).

9. Elément femelle (3) selon l'une des revendications précédentes, **caractérisé en ce que** l'élément de verrouillage (7a, 7b) est monobloc.

10. Elément femelle (3) selon l'une des revendications précédentes, **caractérisé en ce que** la fente (401) de l'élément de verrouillage (7a, 7b) est réalisé par usinage dans le corps (4).

11. Elément femelle (3) selon l'une des revendications précédentes, **caractérisé en ce qu'**il comprend deux éléments de verrouillage (7a, 7b) opposés diamétralement, par rapport à l'axe (X-X') du raccord (1).

12. Raccord (1) pour la jonction amovible de deux canalisations (C2, C3) de fluide sous pression, **caractérisé en ce qu'**il comprend un élément mâle (2) et un élément femelle (3) selon l'une des revendications précédentes.

## Patentansprüche

1. Aufnahmeelement (3) einer Kupplung (1) für die lösbare Verbindung von zwei Leitungen (C2, C3) eines unter Druck stehenden Fluids, das sich in Längsrichtung entlang einer Achse (X-X') erstreckt und umfasst:
- einen Körper (4), der geeignet ist, ineinandergreifend ein Einsteckelement (2) aufzunehmen und der geeignet ist, einen Kanal (30) für den Durchgang des Fluids zu begrenzen, der sich entlang der Achse (X-X') der Kupplung (1) erstreckt,
- mindestens ein Verriegelungselement (7a, 7b), das zur Drehung in Bezug auf den Körper (4) des Aufnahmeelements (3) um eine im Wesentlichen orthoradiale Richtung (X40a-X'40a, X40b, X'40b) zwischen einer ersten Winkelposition, in der das Verriegelungselement (7a, 7b) das Einsteckelement (2) in einer gekuppelten Stellung (Figuren 4, 5, 7) verriegelt, und einer zweiten Winkelposition (Figuren 3, 6), in der das Verriegelungselement (7a, 7b) das Entfernen des Einsteckelements (2) aus dem Aufnahmeelement (3) gestattet, beweglich ist,
**dadurch gekennzeichnet, dass**
- das Verriegelungselement (7a, 7b) eine erste Führungsfläche (S71) in Form eines Abschnitts eines Zylinders mit kreisförmigem Querschnitt, zentriert auf eine Achse (X7a-X'7a, X7b-X'7b) des Verriegelungselements (7a, 7b) aufweist, und
- das Verriegelungselement (7a, 7b) in einem Spalt (401) angeordnet ist, der in dem Körper (4) des Aufnahmeelements (3) eingearbeitet ist und durch einen Zylinder mit kreisförmigem Querschnitt begrenzt ist, der sich entlang der orthoradialen Achse (X40a-X'40a, X40b, X'40b) erstreckt und eine zweite Führungsfläche (S401) in Drehung zur ersten Führungsfläche (S71) des Verriegelungselements (7a, 7b) im Körper (4) des Aufnahmeelements (3) um die orthoradiale Achse (X40a-X'40a, X40b, X'40b) definiert.

2. Aufnahmeelement (3) nach Anspruch 1, **dadurch gekennzeichnet, dass** die erste Führungsfläche (S71) des Verriegelungselements (7a, 7b) sich über die gesamte Länge der Verriegelungselemente (7a, 7b), gemessen gemäß einer Achse (X7a-X'7a, X7b-X'7b) des Verriegelungselements (7a, 7b), die mit der orthoradialen Achse (X40a-X'40a, X40b, X'40b) in der montierten Stellung des Verriegelungselements in dem Spalt (401) übereinstimmt, erstreckt.

3. Aufnahmeelement (3) nach einem der vorhergehenden Ansprüche, **dadurch gekennzeichnet, dass** das Verriegelungselement (7a, 7b) eine Verriegelungsfläche (S72) in Form eines Kegels aufweist, die in Kontakt mit einer Umfangsnut (26) des Einsteckelements (2) in der gekuppelten Stellung (Figuren 4, 5, 7) ist.

4. Aufnahmeelement (3) nach einem der vorhergehenden Ansprüche, **dadurch gekennzeichnet, dass** das Aufnahmeelement (3) einen Verriegelungsring (6) umfasst, der in Längsrichtung entlang der Achse (X-X') der Kupplung (1) zwischen einer ersten Position, in der der Verriegelungsring (6) einen Anschlag bei Drehung des Verriegelungselements (6) in die erste Winkelposition (Figuren 4, 5, 7) des Verriegelungselements (7a, 7b) bildet, und einer zweiten Position (Figur 3), in der der Verriegelungsring (6) die Drehung des Verriegelungselements (6) gestattet, beweglich ist.

5. Aufnahmeelement (3) nach Anspruch 4, **dadurch gekennzeichnet, dass** das Verriegelungselement (7a, 7b) eine Blockierfläche (S73) aufweist, die in Auflage gegen den Verriegelungsring (6) in der ersten Winkelposition des Verriegelungsrings (7a, 7b) ist und die ein Teil eines Zylinders mit kreisförmigem Querschnitt ist, der sich entlang der Achse (X-X') der Kupplung (1) erstreckt.

6. Aufnahmeelement (3) nach Anspruch 5, **dadurch gekennzeichnet, dass** die Verriegelungsfläche (S72) und die Blockierfläche (S73) des Verriegelungselements (7a, 7b) in einer Mantelfläche in Form des Zylinderabschnitts, die durch die erste Führungsfläche (S71) definiert ist, enthalten sind.

7. Aufnahmeelement (3) nach einem der Ansprüche 4 bis 6, **dadurch gekennzeichnet, dass** der Verriegelungsring (6) in Längsrichtung entlang der Achse (X-X') der Kupplung (1) zu einer dritten Position hin beweglich ist, in der der Verriegelungsring (6) einen Drehanschlag für das Verriegelungselement (6) in der zweiten Winkelposition (Figur 11) des Verriegelungselements (7a, 7b) bildet, und dass das Verriegelungselement (7a, 7b) eine Auflagefläche (S74) aufweist, die an dem Verriegelungsring (6) in der zweiten Winkelposition (Figur 11) des Verriegelungsrings (7a, 7b) anliegt.

8. Aufnahmeelement (3) nach Anspruch 7, **dadurch gekennzeichnet, dass** die Auflagefläche (S74) des Verriegelungsrings (7a, 7b) in einer Mantelfläche in Form eines Zylinderabschnitts enthalten ist, die durch die erste Führungsfläche (S71) definiert ist.

9. Aufnahmeelement (3) nach einem der vorhergehenden Ansprüche, **dadurch gekennzeichnet, dass** das Verriegelungselement (7a, 7b) einstückig ist.

10. Aufnahmeelement (3) nach einem der vorhergehenden Ansprüche, **dadurch gekennzeichnet, dass** der Spalt (401) des Verriegelungselements (7a, 7b) durch Bearbeitung in dem Körper (4) hergestellt ist.

11. Aufnahmeelement (3) nach einem der vorhergehenden Ansprüche, **dadurch gekennzeichnet, dass** es zwei Verriegelungselemente (7a, 7b) umfasst, die in Bezug auf die Achse (X-X') der Kupplung (1) diametral entgegengesetzt liegen.

12. Kupplung (1) für die lösbare Verbindung von zwei Leitungen (C2, C3) für unter Druck stehendes Fluid, **dadurch gekennzeichnet, dass** sie ein Einsteckelement (2) und ein Aufnahmeelement (3) nach einem der vorhergehenden Ansprüche umfasst.

## Claims

1. Female element (3) of a coupling (1) for the disconnectable connection of two pipe lines (C2, C3) of fluid under pressure, extending longitudinally along an axis (X-X') and comprising:
- a body (4) able to receive through fitting a male element (2) and defining a channel (30) for the passage of the fluid that extends along the axis (X-X') of the coupling (1),
- at least one locking element (7a, 7b) mobile in rotation with respect to the body (4) of the female element (3) around a generally orthoradial axis (X40a-X'40a, X40b, X'40b), between a first angular position wherein the locking element (7a, 7b) locks the male element (2) in a coupled configuration (figures 4, 5, 7), and a second angular position (figures 3, 6) wherein the locking element (7a, 7b) authorises the withdrawal of the male element (2) outside of the female element (3), **characterised in that**
- the locking element (7a, 7b) has a first guiding surface (S71) in the form of a portion of a cylinder with a circular section centred on an axis (X7a-X'7a, X7b-X'7b) of the locking element (7a, 7b) and
- the locking element (7a, 7b) is arranged in a slot (401) arranged in the body (4) of the female element (3) and delimited by a cylinder with circular section extending along the orthoradial axis (X40a-X'40a, X40b, X'40b) and defining a second guiding surface (S401) in rotation of the first guiding surface (S71) of the locking element (7a, 7b) in the body (4) of the female element (3) around the orthoradial axis (X40a-X'40a, X40b, X'40b).

2. Female element (3) according to claim 1, **characterised in that** the first guiding surface (S71) of the locking element (7a, 7b) extends over the entire length of the locking elements (7a, 7b), measured according to an axis (X7a-X'7a, X7b-X'7b) of the locking element (7a, 7b) coinciding with the orthoradial axis (X40a-X'40a, X40b, X'40b) in mounted configuration of the locking element in the slot (401).

3. Female element (3) according to one of the preceding claims, **characterised in that** the locking element (7a, 7b) has a locking surface (S72) in the form of a portion of cone which is in contact with a peripheral groove (26) of the male element (2) in the coupled configuration (figures 4, 5, 7).

4. Female element (3) according to one of the preceding claims, **characterised in that** the female element (3) comprises a locking ring (6) mobile in translation along the axis (X-X') of the coupling (1), between a first position wherein the locking ring (6) constitutes an abutment in rotation of the locking element (6) in the first angular position (figures 4, 5, 7) of the locking element (7a, 7b), and a second position (figure 3) wherein the locking ring (6) authorises the rotation of the locking element (6).

5. Female element (3) according to claim 4, **characterised in that** the locking element (7a, 7b) has a blocking surface (S73) which is pressing against the locking ring (6) in the first angular position (figures 4, 5, 7) of the locking element (7a, 7b) and which is a portion of a cylinder with a circular section extending along the axis (X-X') of the coupling (1).

6. Female element (3) according to claim 5, **characterised in that** the locking surface (S72) and the blocking surface (S73) of the locking element (7a, 7b) are included in a casing in the form of a portion of cylinder defined by the first guiding surface (S71).

7. Female element (3) according to one of claims 4 to 6, **characterised in that** the locking ring (6) is mobile in translation along the axis (X-X') of the coupling (1), towards a third position wherein the locking ring (6) constitutes an abutment in rotation of the locking element (6) in the second angular position (figure 11) of the locking element (7a, 7b), and **in that** the locking element (7a, 7b) has a support surface (S74) which is pressing against the locking ring (6) in the second angular position (figure 11) of the locking element (7a, 7b).

8. Female element (3) according to claim 7, **characterised in that** the support surface (S74) of the locking element (7a, 7b) is included in a casing in the form of a portion of cylinder defined by the first guiding surface (S71).

9. Female element (3) according to one of the preceding claims, **characterised in that** the locking element (7a, 7b) is of a single block.

10. Female element (3) according to one of the preceding claims, **characterised in that** the slot (401) of the locking element (7a, 7b) is formed by machining in the body (4).

11. Female element (3) according to one of the preceding claims, **characterised in that** it comprises two diametrically opposite locking elements (7a, 7b), with respect to the axis (X-X') of the coupling (1).

12. Coupling (1) for the disconnectable connection of two pipe lines (C2, C3) of fluid under pressure, **characterised in that** it comprises a male element (2) and a female element (3) according to one of the preceding claims.
